# EUROPEAN PATENT APPLICATION

(11) **EP 1 500 421 A1**
(43) Date of publication of application: **26.01.2005**
(21) Application number: 04254435.3
(22) Date of filing: 23.07.2004
(51) Int. Cl.: B01D 35/147, B01D 35/143, F16K 37/00, F02M 37/22

(54) **Valve and fuel supply system**

(30) Priority: 25.07.2003 GB 0317449
(71) Applicant: Goodrich Control Systems Ltd, Solihull, West Midlands B90 4LA (GB)
(72) Inventor: Griffiths, Michael, Bromsgrove Worcestershire B60 1HF (GB); Yates, Martin Kenneth, East Haddon Northamptonshire NN6 8DB (GB)
(74) Representative: Carpenter, David

(57) **Abstract**

A combined by-pass valve and pressure sensor characterised by comprising a housing (16), a fluid inlet (17) whereby fluid can enter the housing, a fluid outlet (18) whereby fluid can exit the housing, a valve seat (19) between said inlet and said outlet, a valve closure member (21) movable relative to the housing along a first axis between a closed position in which the valve closure member (21) engages said seat (19) to prevent communication between said fluid inlet and said fluid outlet, and an open position in which said valve closure member is displaced from said seat placing said fluid inlet in communication with said fluid outlet through said housing, resilient means (31) urging said valve closure member (21) to said closed position, a pressure element (34, 33) within said housing having a first surface thereof exposed to the pressure conditions at said fluid inlet, and a second, opposite surface thereof, exposed to pressure conditions at said fluid outlet, said element being movable, in the direction of said axis, between a rest position to which it is resiliently urged, and a displaced position in which it engages an abutment (32) of said valve closure member (21), and, a position transducer (26, 27) for providing a signal indicative of the position of said pressure element (34, 33).

## Description

### Technical Field

This invention relates to a combined by-pass valve and pressure sensor arrangement primarily, but not exclusively, for use in association with a fuel filter in an aircraft engine fuel supply system, and to a fuel supply system incorporating such an arrangement.

Although for convenience the invention will be described herein in relation to a liquid fuel filter in an aircraft engine fuel system it is to be understood that the by-pass valve and pressure sensor arrangement may find application in other environments where a fluid flow is filtered, and the pressure drop across the filter is of significance.

### Background Art

It is customary to provide a filter in the fuel line through which fuel is supplied from a reservoir to an aircraft engine fuel system, and ultimately to the aircraft engine. The filter is intended to remove contaminants from the fuel flow which, if allowed to reach the fuel system and the engine, can give rise to increased wear, and the possibility of faults having potentially more serious consequences such as fuel supply failure during take-off or flight. For example, the failure of the fuel system, or the engine, during the take-off phase of aircraft flight can be highly problematic.

Replacement of the fuel filter will be a routine maintenance task, but in order to accommodate the possibility of filter blockage it is usual to provide a by-pass fuel line through which fuel can flow around the filter, the by-pass line being controlled by a pressure operated valve so that the by-pass line opens to allow fuel to by-pass the filter when the fuel pressure drop across of the filter exceeds a predetermined value.

In order to provide an indication that the by-pass line is operative it has been proposed to provide a pressure operated switch sensitive to the pressure drop across of the filter, and intended to operate at the same pressure at which the by-pass valve opens, operation of the switch generating an electrical signal, giving rise to a visual or audible signal indicating that the by-pass line is operative.

Although it is intended that the pressure operated switch and the by-pass valve shall operate at exactly the same pressure it is difficult to achieve this with separate components, and there is the risk either that the switch will operate before the valve, thereby giving a false indication that the by-pass is operative, and leading to unnecessary withdrawal of the aircraft from service for maintenance, or alternatively that the valve will operate before the switch, and by-pass operation will continue with no warning being given and with the attendant risk of operating the engine fuel system with unfiltered fuel.

US Patent 3,790,931 illustrates a fuel filter arrangement for a motor vehicle fuel system in which this difficulty is overcome by utilising the movable element of the by-pass valve and the seat against which the movable element of the valve abuts in the closed position of the valve, as electric switch contacts so that when the valve opens an electrical circuit through the movable element and the seat of the valve is broken. While such an arrangement ensures that the "valve-open" warning is given immediately the valve opens, the dangers of using the valve components as switch contacts, in the presence of highly flammable fuel, are obvious.

Moreover, it is desirable to be able to monitor the "health" of the filter prior to the by-pass valve being opened. In this way advance warning of the possibility of the need for filter maintenance, prior to scheduled maintenance intervals, can be obtained. US Patent 5,702,592 discloses a stand alone system for using differential pressure to monitor the "health" of a fluid filter.

It is an object of the present invention to provide, in a simple and convenient form, a combined by-pass valve and sensor whereby pressure conditions upstream of the valve can be monitored, and an indication is given immediately the valve opens.

### Disclosure of Invention

In accordance with the present invention there is provided a combined by-pass valve and pressure sensor comprising a housing, a fluid inlet whereby fluid can enter the housing, a fluid outlet whereby fluid can exit the housing, a valve seat between said inlet and said outlet, a valve closure member movable relative to the housing along a first axis between a closed position in which the valve closure member engages said seat to prevent communication between said fluid inlet and said fluid outlet, and an open position in which said valve closure member is displaced from said seat placing said fluid inlet in communication with said fluid outlet through said housing, resilient means urging said valve closure member to said closed position, a pressure element within said housing having a first surface thereof exposed to the pressure conditions at said fluid inlet, and a second, opposite surface thereof, exposed to pressure conditions at said fluid outlet, said element being movable, in the direction of said axis, between a rest position to which it is resiliently urged, and a displaced position in which it engages an abutment of said valve closure member, and, a position transducer for providing a signal indicative of the position of said pressure element, in the direction of said axis, relative to said housing.

During use of the combined valve and sensor defined in the preceding paragraph the fluid inlet will normally be coupled to a fluid supply line upstream of a filter to be monitored, and the fluid outlet will be connected to the fluid line downstream of the filter. When the filter is clean, the pressure at the fluid inlet of the housing will be such that the pressure element is at, or closely adjacent, its rest position and the valve closure element is in engagement with the seat of the housing so that there is no flow of fluid through the housing. As the performance of the filter deteriorates the pressure at the fluid inlet of the housing will increase and the pressure element will move against its resilient bias towards its displaced position. The change in position of the pressure element relative to the housing will be signalled by the output of the position transducer. The arrangement will be such that the pressure at which the pressure element reaches its displaced position and engages the abutment of the valve closure member will be close to, and just below, the pressure at which the by-pass valve opens by the valve closure member being moved from its seat. With the pressure element in its displaced position the pressure element will move with the valve closure member, and movement of the valve closure member away from its seat will occur at a predetermined position of the pressure element relative to the housing as detected by the position transducer.

Preferably the pressure element includes a flexible bellows which provides the resilient bias urging the pressure element to its rest position.

Desirably the bellows is carried by the valve closure member.

Conveniently the position transducer is an LVDT (linear variable differential transformer) carried by the housing.

Conveniently said abutment is an end of a hollow elongate tube extending from said valve closure member.

Desirably said valve closure member is annular.

Preferably said position transducer is within said housing and includes a push rod which protrudes through the valve closure member and said abutment tube to engage said pressure element.

The invention further resides in a fuel supply system incorporating a fuel flow filter and a combined by-pass valve and pressure sensor as defined above connected hydraulically in parallel with said filter.

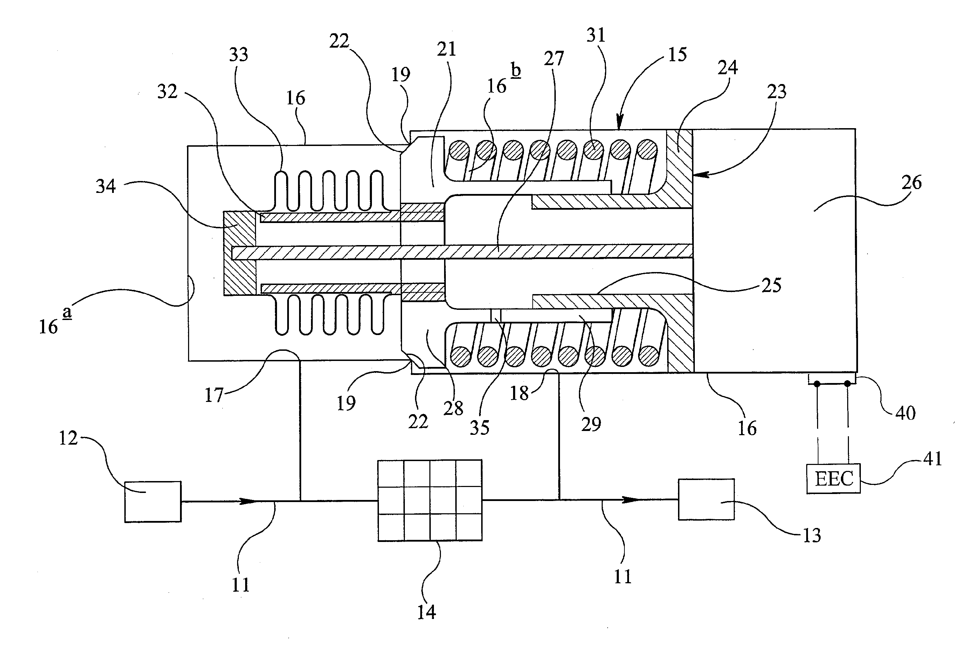

### Brief Description of the Drawing

The accompanying drawing is a diagrammatic representation of a combined by-pass valve and pressure sensor in association with a fuel filter.

### Preferred Mode of Carrying Out the Invention

Referring to the drawing, a fuel line 11 supplies fuel from a reservoir and pump arrangement 12 to an engine and associated fuel control system 13 through a fuel filter 14.

The combined by-pass valve and pressure sensor 15 includes a housing 16 having an inlet chamber 16a provided with a fluid inlet 17 connected, in use, to the line 11 upstream of the filter 14. The housing 16 also includes an outlet chamber 16b having an outlet 18 connected in use to the line 11 downstream of the filter 14.

Intermediate the chambers 16a and 16b the housing 16 defines an annular valve seat 19 against which a frusto-conical surface 22 of a valve closure member 21 can abut to break communication through the housing between the inlet 17 and outlet 18.

Fixed within the housing 16 is a guide member 23 for the valve closure member 21. The guide member 23 comprises an annular disk 24 secured at its periphery to the inner wall of the housing 16 at the end of the chamber 16b remote from the valve seat 19. Integral with the disc 24 is a hollow cylindrical extension 25 extending coaxially of the housing 16 towards the seat 19. A position transducer 26 of known form is received within the housing 16 between an end wall of the housing and the face of the disc 24 remote from the seat 19 and closes the central passage of the guide member 23. A push rod 27 of the position transducer 26 extends coaxially of the housing from the position transducer 26 through the extension 25 of the guide member 23 and through the seat 19 to terminate within the chamber 16a of the housing.

The valve closure member 21 includes an annular head region 28 carrying the frusto-conical surface 22 and integral therewith is a sleeve 29 extending towards the annular disc 24 of the guide member 23, and slidably receiving, as a close sliding fit, the extension 25 of the guide member 23. The interrelationship of the sleeve 29 and the guide member 23 thus guides the closure member 21 for axial movement towards and away from the seat 19 within the chamber 16b of the housing.

A helical compression spring 31 acts between the guide member 23 and the closure member 21 to urge the closure member to its closed position in which the frusto-conical surface 22 engages the valve seat 19 of the housing. An elongate rigid abutment tube 32 is carried by the closure member 21 and extends into a hollow resilient bellows 33 inside chamber 16a of the housing 16. The free end of the push rod 27 protrudes from the free end of the abutment tube 32, and secured to the free end of the push rod 27 is a rigid disc 34 attached to one end of the resilient bellows 33. The resilient bellows 33 is generally cylindrical, and slidably receives the abutment tube 32, the end of the bellows 33 remote from the disc 34 being attached to the abutment tube 32 adjacent its point of connection with the closure member 21.

The abutment tube 32 is in sealing engagement with the closure member 21 and the opposite axial ends of the bellows 33 are sealingly engaged respectively with the tube 32 and the disc 34. Thus the combination of tube 32, bellows 33 and disc 34 seals the central aperture of the valve closure member 21 so that when the frusto-conical surface 22 of the closure member abuts the seat 19 the chamber 16a of the housing is disconnected from the chamber 16b and fluid cannot flow from the inlet 17 to the outlet 18. Correspondingly, when the closure member 21 is displaced from the seat 19 against the action of the spring 31 then fluid can flow from the inlet 17 through the chamber 16a, between the seat 19 and the frusto-conical surface 22, through the chamber 16b and out of the outlet 18. In the arrangement as shown in the drawing therefore when the valve closure member 21 is in a closed position the flow along the line 11 must pass through the filter 14, but when the closure member 21 is displaced from the seat 19 against the action of the spring 31 then the by-pass valve is open and fluid can flow through the housing 16 by-passing the filter 14.

The bellows 33 urges the disc 34 towards the end of the chamber 16a remote from the valve seat 19. The disc 34 has a rest position in which it is axially spaced from the free end of the abutment tube 32. The sleeve 29 of the closure member 21 is formed with a cross drilling 35 which ensures that the interior of the closure member 21, the interior of the abutment tube 32, and the inner face of the disc 34 and bellows 33 are in communication with the chamber 16b and thus the pressure conditions at the fluid outlet 18. The exterior of the disc 34 and bellows 33 is exposed to pressure conditions in the chamber 16a, that is to say the pressure at the fluid inlet 17. At all times the push rod 27 couples the disc 34 to the position transducer 26 and so the position transducer 26 at all times produces an output signal which is representative of the axial position of the disc 34 within the housing 16.

The operation of the valve and sensor arrangement is as follows. When the filter 14 is unobstructed the pressure in the chamber 16a of the housing will not be significantly greater than the pressure in the chamber 16b and the valve closure member 21 and the disc 34 will be in their rest positions as shown in the drawings. The position signal derived from the transducer 26, and representative of the position of the disc 34 will correspond to what may be denoted as "normal" pressure drop across the filter 14 and will be indicative of the fact that the filter 14 is in good condition.

As the filter 14 becomes progressively more clogged by contaminants filtered from the fuel flow in the line 11, the pressure drop across the filter 14 will increase, the pressure in the chamber 16a thus increasing by comparison with the pressure in the chamber 16b. Increasing pressure differential across the disc 34 and bellows 33 will cause the disc 34 to move relative to the abutment tube 32 and the closure member 21 against the spring action of the bellows 33 and this changing position of the disc 34 will be registered by corresponding changes in output signal from the position transducer. Ultimately, at, or just below, the pressure drop across the filter 14 at which it is desired that the by-pass valve will open, the disc 34 will reach a displaced position in which it abuts the end of the abutment tube 32. Thereafter pressure in the chamber 16a, acting upon the exposed surface of the closure member 21 and upon the disc 34 (transmitted to the closure member 21 through the abutment tube 32) will lift the closure member 21 from the seat 19 against the action of the spring 31 thereby opening the by-pass valve, and allowing fluid from the supply 12 to flow through the inlet 17, the chamber 16a, the chamber 16b, and the outlet 18 to the engine system 13. The disc 34 moves with the closure member 21 as it is displaced from the seat 19 and this further change in position of the disc 34 is monitored by the position transducer 26, and the output signal of the transducer 26, representative of the position of the disc 34 within the housing, indicates that the valve member has opened, opening the by-pass.

It will be recognised therefore that the position signal representative of the position of the disc 34 initially reflects the "health" of the filter 14, and, progressively, as the filter becomes clogged, indicates the deterioration in the health of the filter until the point is reached at which the by-pass valve opens whereupon the signal representative of the position of the disc 34 indicates that the by-pass has opened. It will be understood that the interpretation of the signals from the sensor 26 can be manual, in the sense that an observer monitors a gauge, or a row of lights or a sequence of audible signals, or alternatively and more probably, will be monitored by the computer controlled arrangement of the fuel system which will compare the transducer output signals with stored values representative of filter health and valve operative state.

The nature of the position transducer is not of particular significance, and a range of relatively economical position transducers including LVDT, LVIT (linear variable inductance transducer), Hall effect sensor, potentiometer, and optical sensor, is available. It will be recognised that the provision of an abutment with which the disc 34 engages protects the bellows against excessive deflection when exposed to pressures in excess of the by-pass pressure. Immediately by-pass pressure is reached the disc 34, tube 32, bellows 33 and closure member 21 move as a unit. Moreover, in some applications it may be possible to substitute a diaphragm for the bellows 33.

It will be recognised that the use of a bellows 33 (or a diaphragm if chosen in place of the bellows) is preferable to, for example, the use of a sliding piston, as it seals the chamber 16a from the chamber 16b during pressure monitoring before the valve is opened, thus ensuring that there is no leakage of unfiltered "dirty" fuel to the "clean" fuel side of the valve and removing the risk of detritus in the "dirty" fuel hindering sliding movement of the sensing components or entering the sliding interface of the extension 25 and sleeve 29 and prejudicing the efficient opening of the valve.

It will be understood that if desired the combined valve and sensor could be provided with "smart calibration" wherein a solid state memory chip 40 is incorporated into the output arrangement of the transducer 26, the memory chip being programmed during initial calibration of the assembly during manufacture so as to retain the calibration parameters of that particular assembly and avoid the need for recalibration when the assembly is taken from stock, and introduced into its working environment. The bellows and position transducer arrangement is a relatively low cost combination, but the cost may be reduced even further by use of "smart calibration" since the ability to "overlay" the calibration criteria of a particular assembly on the output of that assembly avoids the need to produce a range of products with consistent rate and area parameters as those parameters for any given assembly would be stored in the "smart calibration" chip of the assembly, and in use would be read by the associated electronic control arrangement (EEC) 41 of the engine using the combined valve and sensor, so that the stored calibration data may be used, *inter alia*, to "modify" the control law operated by the electronic control arrangement.

It will be recognised that the data stored in the chip could be identification data specific to that valve and sensor unit, in addition to, or in place of, said calibration data.

## Claims

1. A combined by-pass valve and pressure sensor **characterised by** comprising a housing (16), a fluid inlet (17) whereby fluid can enter the housing, a fluid outlet (18) whereby fluid can exit the housing, a valve seat (19) between said inlet and said outlet, a valve closure member (21) movable relative to the housing (16) along a first axis between a closed position in which the valve closure member (21) engages said seat (19) to prevent communication between said fluid inlet (17) and said fluid outlet (18), and an open position in which said valve closure member is displaced from said seat placing said fluid inlet in communication with said fluid outlet through said housing, resilient means (31) urging said valve closure member (21) to said closed position, a pressure element (34, 33) within said housing having a first surface thereof exposed to the pressure conditions at said fluid inlet, and a second, opposite surface thereof, exposed to pressure conditions at said fluid outlet, said element being movable, in the direction of said axis, between a rest position to which it is resiliently urged, and a displaced position in which it engages an abutment (32) of said valve closure member (21), and, a position transducer (26, 27) for providing a signal indicative of the position of said pressure element, in the direction of said axis, relative to said housing.

2. A combined by-pass valve and pressure sensor as claimed in claim 1 **characterised in that** said pressure element (34, 33) includes a flexible bellows (33) which provides a resilient bias urging the pressure element to its rest position.

3. A combined by-pass valve and pressure sensor as claimed in claim 2 **characterised in that** said bellows (33) is carried by the valve closure member (21).

4. A combined by-pass valve and pressure sensor as claimed in any one of claims 1 to 3 **characterised in that** said position transducer (26, 27) is an LVDT (linear variable differential transformer) carried by the housing (16).

5. A combined by-pass valve and pressure sensor as claimed in any one of the preceding claims **characterised in that** said abutment is an end of a hollow elongate tube (32) extending from said valve closure member (21).

6. A combined by-pass valve and pressure sensor as claimed in any one of the preceding claims **characterised in that** said valve closure member (21) is annular.

7. A combined by-pass valve and pressure sensor as claimed in claim 6 **characterised in that** said position transducer (26, 27) is within said housing (16) and includes a push rod (27) which protrudes through the valve closure member (21) and said abutment (32) to engage said pressure element (34, 33).

8. A combined by-pass valve and pressure sensor as claimed in any one of the preceding claims further **characterised by** including an electronic memory device (40) carried by the housing (16) and storing electronically readable data relevant to that combined by-pass valve and pressure sensor.

9. A combined by-pass valve and pressure sensor as claimed in claim 8 **characterised in that** said stored data is calibration data.

10. A fuel supply system incorporating a fuel flow filter (14) and **characterised by** a combined by-pass valve and pressure sensor as claimed in any one of the preceding claims connected hydraulically in parallel with said filter (14).
